# EUROPEAN PATENT APPLICATION

(11) **EP 3 594 257 A1**
(43) Date of publication of application: **15.01.2020**
(21) Application number: 18183569.5
(22) Date of filing: 13.07.2018
(51) Int. Cl.: C08G 18/61, C08G 18/42

(54) **USE OF PHASE SEGREGATED BLOCK COPOLYMERS WITH TIUNABLE PROPERTIES FOR THE COATING OR SURFCES AND COATED SUBSTRATES**

(71) Applicant: Albert-Ludwigs-Universität Freiburg, 79085 Freiburg im Breisgau (DE)
(72) Inventor: The designation of the inventor has not yet been filed
(74) Representative: Dr. Langfinger & Partner

(57) **Abstract**

Use of phase segregated block-copolymer based on repeating structural elements represented by formula I 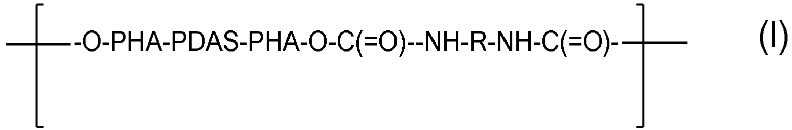 wherein PHA represents at least one block based on one or more α-hydroxy acids, PDAS represents a central block based on a dialkylsiloxane,
the PDAS block has a weight average molecular weight in the range of from 4000 to 10000,
the blocks PHA have a weight average molecular weight in the range of from 2000 to 10 000,
the phase segregated block copolymer has a weight average molecular weight of from 40 000 to 120 000 and wherein
R is a divalent organic residue
for the coating of substrates and coated substrates.

## Description

The present invention relates to the use of phase segregated block copolymers comprising blocks with different transition temperatures (hard and soft segments) for the coating of substrates and substrates coated with such polymers.

Surface properties of substrates can be influenced and determined through the use of suitable coating systems and coating processes which provide the coated surfaces with a property spectrum tailored to the desired use of the respective coated substrates and articles.

Phase segregated block copolymers with hard and soft segments are an interesting group of polymers which have found increasing attention in the recent past.

WO 99/42147 describes biodegradable polymer compositions comprising at least one hard segment having a transition temperature between -40 and 270°C and at least one soft segment which has a transition temperature which is at least 10°C lower than that of the hard segment, which soft segment is linked to at least one hard segment wherein at least one hard or soft segment includes a biodegradable region or wherein at least one of the hard segments is linked to at least one of the soft segments through a biodegradable linkage. The term transition temperature denotes the melting point in case of a crystalline segment or the glass transition temperature in case of an amorphous segment. Preferably, at least one of the hard and soft segments is a thermoplastic polymer and the hard segment preferably comprises cyclic moieties. Polyhydroxy acids are mentioned amongst the group of preferred polymers with a biodegradable region and polylactides are mentioned as degradable polymer segments on page 11, line 14.

Gonsalves et al., J. Pol. Sci. Part A. Pol. Chem. Vol 34, 2737-2742 (1996) disclose the copolymer synthesis of poly(L-lactide-b-DMS-L-lactide) polymers via the ring opening polymerization of L-lactide in the presence of hydroxypropyl-terminated poly dimethyl siloxane (PDMS).

Djonlagic et al., J. Appl. Pol. Sci. Vol. 122, Issue 4, pp 2715-2730 (2011) describe novel polyurethane copolymers derived from a diisocyanate, butane diol and a hydroxy terminated PCL-PDMS-PCL oligomer which are synthesized by a two step polyaddition reaction.

Cooper et al., J. Pol. Sci. Pol. Phys. Ed. 23, 2319-2338 (1985) describe polyurethane block polymers obtained through the reaction of hydroxyl-terminated PDMS soft segments with a molecular weight of 2000 and 4,4' methylene diphenylene diisocyanate.

WO 2006/115799 discloses a biodegradable polymer comprising the reaction product of a polyol A, a dihydroxyl terminated oligosilsesquioxane B (also referred to as POSS) and a diisocyanate, wherein the polyol is semicrystalline and selected from the group of biodegradable and non-biodegradable polyols or mixtures thereof.

US2009/035350 discloses a composition comprising a biodegradable polymer comprising at least two segments with different glass transition or melting temperatures wherein one segment is made from at least one diisocyanate and at least one diol and the second segment is derived from a polymer comprising at least one hydroxyl, amino or thiol end group.

P. Boehm in his PhD Thesis entitled "Functional silicones and Silicone-Containing Block Copolymers (Johannes Gutenberg University of Mainz, Germany) describes in chapter 2.3. starting on page 79 AB and ABA block copolymers based on poly(lactide) and poly(dimethylsiloxane) as strongly phase segregated systems. Synthesis of these polymers was carried out using hydroxyl end-functionalized poly (dimethyl siloxane)s, prepared via anionic or cationic ring-opening polymerization, as a macro initiator for the ring-opening polymerization of the dilactide.

WO 2009/20,797 discloses compositions comprising a biodegradable copolymer comprising at least two segments A and B wherein the A segment has a transition temperature in the range from about 50°C to about 300°C and is made from at least one diisocyanate and at least one diol, diamine or dithiol chain extender wherein the B segment has a transition temperature at least 20°C below the transition temperature of segment A, which segment A is derived from a polymer containing at least one hydroxyl, amino or thiol end group. The compositions are said to be particularly useful for the manufacture of implantable devices like e.g. stents or the like.

WO 94/19384 discloses alternating (ABA)n polylactide block copolymers with the general formula R(A-B-A-L)x-A-B-A-R wherein A is a polyhydroxy acid residue derived from lactide and B is an oligomeric diol or diamine residue and L is a chain extending unit. The polymers are said to be useful for controlled release applications for active ingredients.

WO 2016/135349 discloses phase segregated block copolymers which may be preferably used for the manufacture of medical devices such as stents or other implants or the like.

There still exists an ongoing need for further coating systems with tunable properties.

It was thus an object of the present invention to provide a use of phase segregated block-polymers which have an interesting property spectrum and the properties of which when used in a coating composition are tunable to the desired application through modifications in their composition.

This objective has been achieved with the use of phase segregated copolymers in accordance with claim 1.

Preferred embodiments of the present invention are set forth in the dependent claims and in the detailed specification hereinafter.

The phase segregated block copolymers used in accordance with the present invention are based on structural elements represented by formula (I) 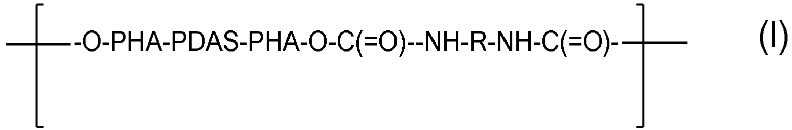
wherein PHA represents at least one block based on one or more α-hydroxy acids,
PDAS represents a central block based on a dialkylsiloxane, the PDAS block has a weight average molecular weight in the range of from 2000 to 20000, preferably of from 4000 to 10 000 the blocks PHA have a weight average molecular weight in the range of from 1000 to 20 000, preferably of from 1500 to 10 000, and the phase segregated block copolymer has a weight average molecular weight of from 20 000 to 200 000, preferably of from 20 000 to 120 000 and wherein
R is an organic divalent group.

The phase segregated block-copolymers used in accordance with the present invention comprise blocks (hereinafter referred to as PHA) based on one or more α-hydroxy acids (HA).

α-hydroxy acids (HA) are a class of compounds comprising a carboxyl group (COOH) and a hydroxyl group on adjacent carbon atoms, i.e. they follow the general formula 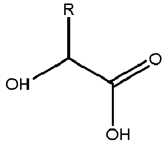 wherein R may be a linear, branched, or cyclic aliphatic group, an aryl group comprising 6 to 30 carbon atoms which may comprise a fused ring, or an alkylaryl group having 7 to 40 carbon atoms and wherein the hydrogen atoms at the carbon atoms of R may be replaced with other groups.

For the purpose of the present invention PHA blocks which are biodegradable are especially preferred.

Aliphatic polyesters derived from α-hydroxy acids have been widely investigated as they often show an interesting degree of biodegradability.

α-hydroxy acids, the polymers of which are biodegradable, are often derived from food products, such as glycolic acid (from sugar cane), lactic acid (from sour milk or fermentation of carbohydrates such as sugar cane, beet and corn), malic acid (from apples), citric acid (from citrus fruits) and tartaric acid (from grape wine).

Another group of biocompatible (i.e. biodegradable) polyesters may be derived from α-hydroxy acids which have been obtained through diazotation of α-amino acids in accordance with the following general 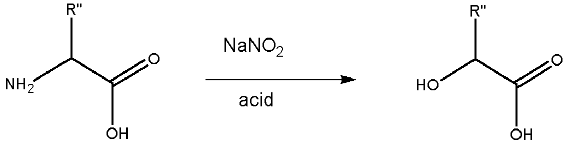 reaction scheme
α -amino acids are naturally occurring in a wide variety and can be synthesized by known methods so that the α-hydroxy acids derived therefrom are also quite readily available. Katzhendler et al., Polymers 2010, 2, 418-439 (2010) describe the hydrolytic degradation behaviour of biocompatible polyesters derived from a number of α-hydroxy acids obtained from α-amino acids, including Leucin, Isoleucin, Phenylalanine and Valin, either as homopolymers or as copolymers with other α-hydroxy acids including e.g. lactic acid and glycolic acid or hydroxyhexanoic acid.

The data shown by Katzhendler also include glass transition temperatures for the homo and copolymers and the data show that the glass transition temperature can be tuned by appropriately selecting the proportions of the various α-hydroxy acids. Thus, e.g. the glass transition temperature of PLA which is around 50-60°C can be lowered by including units derived from the other α-hydroxy acids.

Preferred α-hydroxy acids for the PHA blocks in the phase segregated block copolymers used in accordance with the present invention are malic acid, glycolic acid and lactic acid, in particular lactic acid and glycolic acid or combinations thereof in the form of block or random copolymers.

The detailed description refers to these α-hydroxy acids as representatives but in principle any α-hydroxy acid which can be converted to biodegradable PHA blocks, may be used in accordance with the present invention.

The PHA blocks may be homopolymers of one α-hydroxy acid, such as polyglycolic acid (PGA) or polylactic acid (PLA) or they may comprise units derived from more than one α-hydroxy acid, such as e.g. poly(lactide-co-glycolide) where the units derived from the different α-hydroxy acids may be present in block or random distribution in the PHA block.

Accordingly PHA may denote PLA blocks, PGA blocks or blocks having constituting elements based on PLA-PGA combinations. The blocks may comprise one or more than one block based on PLA and PGA, such as e.g. three-block copolymers PGA-PLA-PGA or PLA-PGA-PLA to give only two examples.

The weight average molecular weight of the PHA blocks in the phase segregated block copolymers in accordance with the present invention is in the range of from 1000 to 20 000, preferably from 1500 to 10 000, more preferably of from 2000 to 7000 and most preferably in the range of from 2200 to 5500.

The weight average molecular weight M_{w} of a polymer takes into account the molecular weight of individual chains in determining the contribution to the molecular weight average. The higher the molecular weight of an individual chain in the ensemble, the higher the contribution thereof to M_{w}. Accordingly, M_{w} is determined by methods that are sensitive to the molecular size. A molecular weight M_{w} of 5000 means that 50% of the total weight of the sample is comprised of molecules of individual molecular weights of less than 5000 and 50 % of the total weight of the sample is comprised of molecules having an individual molecular weight of more than 5000.

The weight average molecular weight as referred to in the context of the present invention is determined by gel permeation chromatography using a GPC 1200 System with isocratic pump, preparative auto sampler, variable wavelength UV-detector and refractive index detector. Calibration was made with Ready Cal-Kit High (Polymer Standards Services) and PS-H Tri pack (Agilent technologies (both calibration kits using narrow molecular weight distribution polystyrene. The columns used were SDV Precolumn and SDV 100 Å, SDV 1000 Å and SDV 10 000 Å at a temperature in the range of from 21.5 to 22.5 °C and a flow rate of 1 ml/min. Measurement time was 50 minutes. The data were evaluated and analyzed with the PSS WinGPC Unity 7.21 software.

The phase segregated block-copolymer used in accordance with the present invention comprise polydialkylsiloxane blocks (hereinafter referred to as PDAS, which blocks have a weight average molecular weight in the range of from 2000 to 20 000, preferably from 4000 to 10 000, more preferably of from 4500 to 8500 and even more preferably of from 5000 to 7500 which are bound at their terminal ends to PHA blocks so that a structural element PHA-PDAS-PHA results.

A siloxane is a functional group in organosilicon chemistry with the Si-O-Si-linkage. The word siloxane is derived from the words silicon, oxygen and alkane. Siloxane materials may be composed of several types of so called siloxide groups, depending on the number of Si-O bonds: M-units represented by general structural element R₃SiO_{0.5}, D-units by the general structural element R₂SiO and T-units represented by the general structural element RSiO_{1.5}.

Siloxane functional groups form the backbone of the silicones.

Polydialkylsiloxanes may be represented by the following general formula 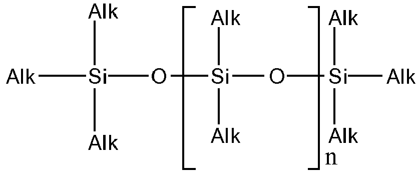 wherein Alk, which may be the same or different at each occurence, represents a linear, branched or cyclic alkyl group.

In accordance with the above nomenclature polydialkylsiloxanes may be denoted as M-Dₙ-M.

Preferred alkyl groups are linear or branched alkyl groups having 1 to 12, preferably 1 to 8 and more preferably 1 to 4 carbon atoms.

The best known example of polydialkylsiloxanes is polydimethylsiloxane (where Alk is a methyl group, hereinafter referred to as PDMS), which is also the most preferred polydialkylsiloxane in accordance with the present invention.

The organic divalent group R may be an aliphatic or an aromatic divalent group and is preferably the central part linking the two isocyanate groups of a diisocyanate. It may generally be the linking element of a difunctional compound suitable to be used as a chain extender for the preformed blocks PHA-PDAS-PHA described above.

The phase segregated block copolymers used in accordance with the present invention are preferably obtained by a reaction sequence comprising several steps.

In the first step a hydroxyl terminated polydialkylsiloxane HO-PDAS-OH having a molecular weight as disclosed above is reacted with a α-hydroxy acid or a mixture of α-hydroxy acids or derivatives thereof or a hydroxyl terminated α-hydroxy acid polymer HO-PHA-OH to obtain at the end a hydroxyl terminated block copolymer HO-PHA-PDAS-PHA-OH.

Hydroxyl terminated polydialkylsiloxanes, e.g. hydroxyl terminated PDMS with molecular weights in the range required are either commercially available for various sources (e.g. Sigma Aldrich) or may be obtained in accordance with processes known to the skilled person so that no further details need to be given here.

The hydroxyl terminated block copolymer obtained in the first step is thereafter reacted with a diisocyanate, optionally in the presence of chain extenders to obtain the final product comprising the urethane linkage. The second step principally corresponds to a classical polyurethane synthesis reaction of a polyol with a diisocyanate (or a polyisocyanate with more than two isocyanate groups) and has been described in many literature references.

Suitable isocyanates are the isocyanates commonly used for polyurethane synthesis, i.e. di- or multifunctional isocyanates having two or more than two -NCO groups per molecule. The isocyanates may be aliphatic, cycloaliphatic, polycyclic or aromatic in nature. Just by way of example, toluylene diisocyanate (TDI), methylene diisocyanate (MDI), xylene diisocyanate (XDI), meta-tetramethylxylylene diisocyanate (TMXDI), naphthalene-1,5-diisocyanate (NDI), p-phenylene-diisocyanate (PPDI), 3,3'-dimethyldiphenyl-4,4'-diisocyanate (DDDI), 1,6-hexamethylene diisocyanate (HMDI or HDI), 2,2,4-trimehtylhexamethylene diisocyanate (TMDI), isophorone diisocyanate (IPDI), 4,4'-dicyclohexylmethane diisocyanate (H₁₂MDI), norbornane diisocyanate (NDI) or 4,4'-dibenzyl diisocyanate (DBDI) may be mentioned here. In principle, however, the selection of the diisocyanate is not subject to particular limitations and the skilled person will select a suitable diisocyanate based on his or her professional experience and adapted to the specific situation. Suitable diisocyanates are commercially available from a number of sources and the skilled person is aware of suitable methods for their manufacture so that no further details need to be given here.

In accordance with a preferred embodiment of the present invention, in the first step a hydroxyl-terminated polydimethyl siloxane is reacted with lactide (or a mixture of lactide and glycolide) to obtain a triblock copolymer having a central block derived from polydimethylsiloxane sandwiched between two PHA blocks which have terminal hydroxyl groups. The reaction is a so called ring opening polymerization (ROP) which may be summarized by the following general reaction scheme (shown for lactide):

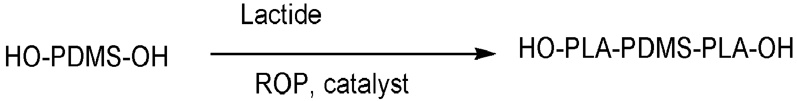

Lactide, the cyclic diester of lactic acid, has the following structure 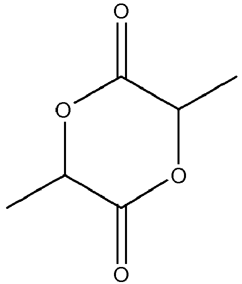 and glycolide is the respective compound wherein the methyl groups are replaced by hydrogen atoms.

The ring opening polymerization of lactides with hydroxyl terminated polydimethylsiloxanes in the presence of a tin catalyst has been described in the literature, e.g. by Gonsalves et al. J. Pol Science Part A: Polymer Chemistry Vol. 34, 2737 (1996). SnOct₂ (stannous octoate), the hydroxyl terminated PDMS and the lactide were reacted in a sealed tube in a heated oil bath to obtain the desired products.By varying the molar ratio of lactide and PDMS block copolymers with different percentages of PDMS and PLA units were obtained.

The content of the PHA segments in the PHA-PDAS-PHA copolymers is not particularly critical, but in general is in the range of from 20 to 80 wt%, preferably in the range of from 33 to 75% by weight and most preferably in the range of from 40 to 70 % by weight, based on the entire weight of the PHA-PDAS-PHA polymer.

Paul Boehm in his PhD thesis at the University of Mainz, entitled "Functional silicones and silicone containing block copolymers" starting on page 78 discloses the preparation of ABA block copolymers consisting of PDMS and PLA segments by using hydroxyl end-functionalized PDMS for cationic or anionic ring opening polymerization of dilactide to obtain copolymers with various block-length ratios which may be steered through the molar ratio of the reactants. The bis-hydroxy functionalized PDMS was mixed together with the lactide and dissolved in anhydrous methylene chloride . The polymerization was started by the addition of 1 mol% of DBU (with respect to the amount of lactide) which was added through a syringe. The reaction was quenched after 20 min at ambient temperature by the addition of benzoic acid and the prodcut mixture was purified to obtain the desired block copolymers.

The foregoing literature references are only two examples showing the reaction of hydroxyl terminated PDMS with lactides and the skilled person will select the most appropriate specific reaction conditions depending on the desired molecular weight of the product.

In certain cases, the use of a tin organic compound as catalyst has proved to be advantageous and thus represents a preferred embodiment of the present invention. The reaction temperature with Sn catalysts is generally in the range of from 60 to 120 °C, preferably in the range of from 70 to 100°C. The skilled person will choose the molar ratio of PDMS and lactide to achieve a desired molecular weight of the product as is well known for this kind of reaction. No further details need to be given here.

Block copolymers based on other polydialkylsiloxanes and/or other α-hydroxy acids may be obtained in an analogous manner by using the appropriate starting materials.

In accordance with a further embodiment of the present invention, fluorinated diols may be used as co-monomers in the synthesis of the PDAS blocks used as starting material, in the synthesis of the intermediate products or together with the di- or polyisocyanate in the final step as chain extender. The amount of such co-monomers is not subject to particular limitations but amounts of 10 mol%, preferably 5 mol% or less, based on the entire weight of the diols respectively di- or polyisocyanates have shown to be useful. Due to the polar nature of the fluorine atoms and the low surface energy of fluorinated polymers the oligomeric segments comprising such fluorinated components migrate and may be segmented on the surface which introduces anti-fouling and non-coagulant properties to the surface, which is in particular advantageous for materials in contact with blood like e.g. stents.

Just by way of example for fluorinated co-monomers or chain extenders fluorinated dihydroxy polyethers (often referred to as FHPE) which are known to the skilled person and which are commercially available from a number of sources. Just by way of example, fluorinated polyether compounds of the general formula T'-Q'_{y}-R_{f}-Q-Tₖ, wherein R_{f} is a monovalent or divalent polyfluoropolyether group, Q and Q' are independently a chemical bond or a divalent organic linking group and T and T' are hydroxyl groups may be mentioned here. Two exemplary compounds of this type are reproduced below:

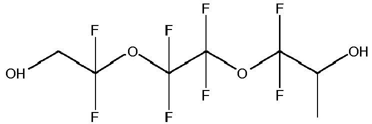

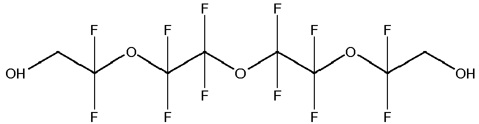

The skilled person is ware of other suitable fluorinated polyether compounds and will select the appropriate compound based on the specific application situation.

As is apparent from the foregoing description, by choosing the appropriate reaction conditions and the molar ratio of the reactants, block copolymers of various compositions may be obtained.

If more than one α-hydroxy acid is used as reactant, PHA blocks comprising more than one HA repeating unit may be obtained and if different α-hydroxy acids are reacted sequentially, PHA blocks may be obtained which themselves comprise blocks of different HA units, i.e. differing from a random distribution which is obtained when using a mixture. The skilled person will use the molar ratio of the reactants as well as the simultaneous or sequential addition for steering the synthesis.

The hydroxyl terminated block copolymers obtained in the first reaction step are then reacted with a polyisocyanate. The hydroxyl-terminated block copolymer serves as a "polyol" in the reaction, which is a classical method for the synthesis of polyurethanes. The skilled person is aware of the suitable reaction conditions and will carry out the reaction in an appropriate manner adapted to the desired application and to achieve the weight average molecular weight in the range of from 20 000 to 200 000, preferably from 40,000 to 120,000, more preferably of from 40,000 to 100,000 and even more preferably in the range of from 50,000 to 90,000.

The choice of isocyanate for chain extending is not particularly critical and in principle any type of isocyanate may be used. As biodegradability or biocompatibility is a preferred property of the products, aliphatic isocyanates are generally preferred, however and methylene diisocyanate or hexamethylene diisocyanate may be mentioned as two examples.

The reaction conditions for the reaction of the polyisocyanate with the hydroxyl terminated block copolymer in the first step are not particularly critical and may be selected depending on the polyisocyanate used.

The molecular weight of the final product can be controlled by choosing the appropriate molar ratio of polyisocyanate and block copolymer as is known to a skilled person for the molecular weight control in a step-growth addition polymerization.

From the foregoing it is apparent that the phase segregated block copolymers used in accordance with the present invention are characterized by structural elements of general formula I.

Just by way of example the following scheme shows the synthesis of two types of phase segregated block copolymers in accordance with the present invention with polydimethylsiloxane as PDAS element and lactide as PHA element.

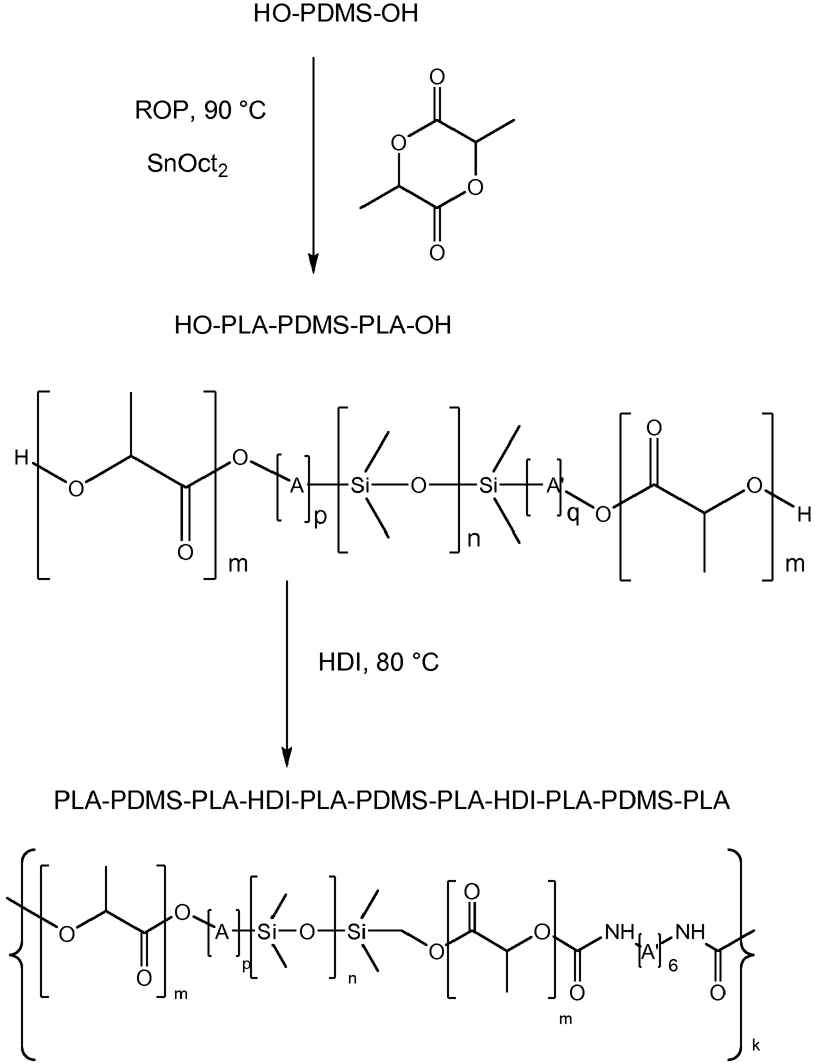

It is readily apparent that by using mixtures of lactide and glycolide or sequential reaction of lactide and glycolide in the first step. the structure of the PHA block may be modified.

Phase segregated block copolymers obtained from the reaction of PDMS and lactice and/or glycolide in the first step and subsequent reaction with a polyisocyanate are the most preferred block copolymers of the present invention.

The variables m and n in the scheme above characterize the block length of the PHA and the PDAS block and are selected so as to fulfill the molecular weight requirements described above.

A and A', independent of one another. represent SiR₂ or CR₂ wherein R is a hydrogen atom or an alkyl group with 1 to 8 carbon atoms.

The parameters p and q represent the number of silylene or alkylene groups if the hydroxyl functionalized PDAS is terminated by hydroxyalkyl groups or hydroxysilyl groups. In case of OH-end groups as such, p and q are 0.

In accordance with a preferred embodiment, the phase segregated block-copolymers in accordance with the present invention have a polydispersity index (PDI) of less than 1.8, preferably of less than 1.7 and even more preferably of less than 1.6. The PDI is obtained by dividing weight average molecular weight by number average molecular weight a given product.

As mentioned before, the phase segregated block copolymers used in accordance with the present invention are preferably biodegradable or biocompatible. For the purpose of the present invention, biodegradable denotes a substance, which is chemically dissoluted, e.g. degraded or broken down, by the action of bacteria or by other biological means. In general, respective materials degrade by hydrolysis, by exposure to water or enzymes under physiological conditions, by surface erosion, bulk erosion or a combination thereof. The degradation may occur at different rates, depending on the conditions of the environment such as temperature, oxygen content, water content and the like. In the course of the biodegradation the polymeric molecules are broken down to small fragments. Generally, the breakdown of the polymer occurs to at least 50 % in a period of time of less than three months at a temperature at ambient temperature if a polymer is denoted biodegradable. However, there is no fixed definition for the term biodegradable in this regard.

The phase segregated polymers of the present invention are used for the coating of substrates of any type. These substrates may be derived from metallic or non-metallic or natural or synthetic materials and they may have any shape or structure.

The coatings obtained from the phase-segregated block copolymers provide a smooth surface, are compostable and biodegradable, are odorless and hydrophobic in nature and thus may e.g. be used to reduce water uptake of the substrate. Furthermore, the surfaces obtained are easy to clean and self-renewable at comparatively low temperatures.

Due to these properties of the coatings obtained in accordance with the present invention, suitable substrates for the coating may be of any shape or structure as the benefits referred to above apply to any kind of surface which may be subjected to a coating process.

The substrate may i.a. be a bulk solid material, a granular material (e.g. a polymer granulate) or any shaped article.

Just by way of example for shaped articles floorings (based on synthetic or natural materials) or materials used for building elements in any type of construction (e.g. walls in buildings), furnitures, any type of products made from any type of thermoplastic, thermosetting or duroplastic natural or synthetic resin (e.g. films, foils or three-dimensional shaped articles or the like) may be mentioned here.

Granules of respective synthetic or natural materials or resins are also suitable substrates for the purpose of the present invention.

Furthermore, materials and products made from paper or based on paper or paper-like materials may also be mentioned here as suitable substrates.

For the purpose of the present invention, the term paper is intended to denote a thin material produced by pressing together moist fibres of cellulose pulp derived from wood, rags or grasses, and drying them into flexible sheets. It is a versatile material with many uses, including writing, printing, packaging, cleaning, and a number of industrial and construction processes.

A thermoplastic, or thermosoftening plastic, is a plastic material, a polymer, that becomes pliable or moldable above a specific temperature and solidifies upon cooling.

Most thermoplastics have a high molecular weight. The polymer chains associate through intermolecular forces, which weaken rapidly with increased temperature, yielding a viscous liquid. Thus, thermoplastics may be reshaped by heating and are typically used to produce parts by various polymer processing techniques such as injection molding, compression molding, calendering, and extrusion. Thermoplastics differ from thermosetting polymers, which form irreversible chemical bonds during the curing process. Thermosets do not melt when heated: they decompose and do not reform upon cooling.

If the phase-segregated block-copolymers are used for the coating of surfaces of substrates based on natural materials, the coatings are beneficial in immobilizing and covering natural residues and microorganisms frequently present on the surface of respective substrates. If the respective substrates are used for the packaging or transport of food materials, this is an important advantage. The same applies to substrates based on natural materials which are used as any kind of tableware such as plates, dishes, forks, knifes spoons etc. where the coating prevents the natural residues or microorganisms often present on the substrates to come into contact with the food.

The natural materials from which the substrates can be obtained are not subject to particular limitations. Just by way of example, wood, plant leaves (e.g. from date palm, coconut palm or potato leaves), corn, wheat or rice husk or any kind of straw materials may be mentioned here which are used for the manufacture of tableware, plates, degradable utensils and food containers.

Textiles based on natural or synthetic fibers, natural or synthetic leather and wood surfaces may also be coated in accordance with the present invention.

The use in accordance with the present invention can also be applied to substrates with metallic surfaces such as implants. In this case the coatings obtained with the segregated block copolymers provide a very smooth surface thus providing advantages in blood contacting applications where the surface friction caused by the implant can be significantly reduced thus decreasing or avoiding the risk of clogging or other undesirable effects. One example of such blood-conatcting applications are stents which may be coated in accordance with the present invention.

To provide the coating with anti-bacterial and/or anti-fungal properties the phase segregated copolymers used in accordance with the present invention can be combined with additives which provide the respective properties. Natural oils such as neem oil, orange oil, clove oil, eucalyptus oil, cinnamon oil, lemongrass oil, lavender oil or bergamot oil, or extracts such as turmeric extract, peppermint extract, rosemary extract or black-pepper extract may be mentioned as examples. These natural additives are preferably used if the coated substrate is applied in the packaging or storing of foods or for tableware where the use of synthetic antibiotics or fungicides is often undesired. The additives may also be encapsulated in a matrix of the phase segregated block-copolyer and my be releasde during the coating process or later as kind of controlled release.

The additives can be added to the polymer composition prior to the coating process or during the coating.

Suitable coating methods for various types of surfaces and substrates are known to the skilled person and have been described in the literature. The skilled person will select the suitable coating method based on his professional experience and the actual application scenario so that no further details need to be given here.

Just by way of example roll-to-roll processes, eventually with plasma activation and bonding, dip coating, electrospraying and electrospinning may be mentioned here.

Indoor and outdoor surfaces may be coated by using activatable sheets obtained from the segregated block copolymers. Such sheets can be easily obtained as the phase segregaeted block copolymers are thermoplastic in nature and can thus be processed by all methods known for thermoplastic polymers.

The polymers used in accordance with the present invention may also be used in the form of a coating composition, comprising the polymers and, if applicable, any additives mentioned hereinbefore, in a solvent, such as an organic polar solvent such as dioxane or tetrahydrofurane to mention only two examples. The concentration of the polymer in such a coating composition is usually in the range of from 0.1 to 10, preferable in the range of from 0.5 to 5 wt%.

The thickness of the coating is not subject to particular limitations and depends i.a. on the coating method applied.

In certain applications, coatings constitiuting 5 wt% or less of the weight of the coated substrate have proved to be sufficient to achieve the desired beneficial effects.

In principle the substrate may be - as mentioned before - of any shape or form and there is no specific limitation in this regard. Some coating processes may be better suited for certain substrate forms and the skilled person will take this into account based on his professional expertise.

Another embodiment of the present invention relates to the coated substrates obtained in accordance with the use of the present invention. As mentioned above, the structure or shape of the substrate is not of particular importance and there are no specific limitations in this regard.

Plates, food containers, degradable utensils, tableware, and shaped or formed articles made from textiles, synthetic or natural leather may be mentioned here, this listing not being limiting for the possible substrates.

The coatings obtained in accordance with the present invention are thermoplastic in nature, are hydrophobic, odorless, compostable and biodegradable, biocompatible and provide a smooth and easy to clean surface.

The following examples show preferred embodiments of the present invention.

### Examples 1-4

Pre-dried Poly(dimethylsiloxane), bis(hydroxyalkyl) terminated (Mw∼8500 g/mol, Mn 5600 g/mol, PDI 1.5, purchased from Sigma Aldrich) and lactide (98%, Aldrich) were charged in a clean pre-dried three-neck round-bottom flask (equipped with overhead KPG stirrer, reflux condenser) and dried *in vacuo* for 1 h. The reactor was flushed with Argon as an inert gas and was connected to Argon balloon during the reaction. Dry toluene (dried by Na in Ar atmosphere) was added as solvent and the reaction mixture was heated to 90 °C (using a silicon oil bath with a magnetic stirrer). Sn(Oct)₂ catalyst (1-0.5 mol-% of lactide) dissolved in 5 mL dry toluene was added drop wise and the reaction mixture was stirred for 20 h at 90 °C (after addition of glycolide 15 h more) .

10-20 mL dry toluene was added for high viscous solutions. The temperature was decreased to 70 °C and 1,6-hexamethylene diisocyanate (HDI), dissolved in 5 mL dry toluene was added drop wised. The mixture was stirred for 2.5 h at 70 °C. The temperature was elevated to 90 °C and pre-dried 1,4-Butanediol (BD) chain extender was added. The mixture was stirred for 2 h at 90 °C. Oil bath was removed and the mixture was stirred over night at room temperature.

### Work-up

The polymer solution was diluted with the reaction solvent if it is too viscous, coagulated in 500 mL cold Ethanol, washed with technical grade Ethanol (3 times, 500 mL) and finally dried under reduced pressure to yield constant weight.

The details of the experiments are shown in Table 1.

**Table 1**

| | | PDMS Macro-initiator | Lactide or Glycolide | Solvent | Sn(Oct)₂ µL | µL | BD µL |
|---|---|---|---|---|---|---|---|
| Ex. 1 | PSLLU 1:1 | 7.4 g | 7.2 g L-Lactide | 20 mL Toluene | 323 | 424 | 117 |
| Ex. 2 | PSLLU 1:1.5 | 7.4 g | 10.8 g L-Lactide | 30 mL Toluene | 485 | 424 | 117 |
| Ex. 3 | PSLLU 1:2 | 7.4 g | 14.4 g L-Lactide | 40 mL Toluene | 646 | 424 | 117 |
| Ex. 4 | PSLGU 1:0.8:0.2 | 7.4 g | 5.76 g L-Lactide + 1.16 g | 20 mL Toluene | 162 | 424 | 117 |
| | | | Glycolide (after 20 h of reaction) | 10 mL DMAc (by Glycolide addition) | | | |

The molecular weight of the starting materials, the intermediate block polymers obtained before addition of the HDI and of the final products products as well as the polydispersity index are given in Table 2was determined by GPC as described before. As can be seen the PDMS block had a Mw of 8500 g/mol, the PLA block of between 6900 and 9200 g/mol and the final products had molecular weights Mw of from 55900 to 79400 g/mol. A comparative product (Example 4) obtained from PDMS and HDI only (without lactide) had a Mw of 135 000 and a polydispersity index of 1.36.

**Table 2**

| Example | Mw | PDI | PDMS content mole% | PLA content mole% |
|---|---|---|---|---|
| 1 intermediate | 15,500 | 1.33 | 49 | 49 |
| 1 final | 79,400 | 1.55 | 48 | 49 |
| 2 intermediate | 17,700 | 1.29 | 41 | 58 |
| 2 final | 55,900 | 1.36 | 40 | 59 |
| 3 intermediate | 17,200 | 1.08 | 34 | 64 |
| 3 final | 58,600 | 1.34 | 33 | 66 |
| 4 intermediate | - | - | - | - |
| 4 final | 135,470 | 1.36 | 100 | 0 |

The products in accordance with the invention showed good thermal stability and mechanical properties and were melt processible.

### Example 5

The polymer in accordance with example 1 (comprising 48 mole% of PDMS in the polymer chain) was used to coat palm leaf plates by dip coating with a solution of the polymer in tetrahydrofurane (0.5 g polymer in 1 ml THF) and thereafter the water uptake of the coated materials was determined at 25 and 60°C over time. The water uptake was 15 wt% after 10 minutes, 35 wt% after 60 minutes and 55wt% after 120 minutes (values at 60 °C were 20, 45 and 55 wt%). The uncoated reference material showed a water uptake of 30 wt% after 10 minutes, 70 wt% after 60 minutes and 140 wt% after 120 minutes at 25 °C (the respective values at 60°C were 45 wt%, 100 wt% and 180 wt%).

### Example 6

Two films obtained from the polymer of example 1 with a thickness of 0.12 mm were subjected to an oxygen plasma treatment in a controlled oxygen radio frequence energized plasma chamber for 70 seconds and thereafter the films were pressed together to provide bonding after plamsa exposure. Scanning electron microscopy (SEM) images showed the bonding of the sheets.

### Example 7

Canvas textile (100% cotton) was dip coated with a solution of the polymer of example 1 (0.5 g/ml in THF). After 2 minutes of drying time, the water contact angle was determined. The coated material showed a strong increase in static water contact angle compared to polylactic acid used as comparison which is an indicator of the hydrophobic nature of the coating.

Similar results were obtained when natural leather was coated with the coating composition (1g/ml in THF) of the same polymer (drying time in this case was 3 minutes).

## Claims

1. Use of phase segregated block-copolymers based on repeating structural elements represented by formula I 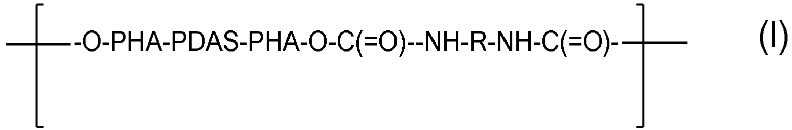
wherein PHA represents at least one block based on one or more α-hydroxy acids,
PDAS represents a central block based on a dialkylsiloxane,
the PDAS block has a weight average molecular weight in the range of from 2000 to 20000,
the blocks PHA have a weight average molecular weight in the range of from 1000 to 20 000,
the phase segregated block copolymer has a weight average molecular weight of from 20 000 to 200 000 and wherein
R is a divalent organic radical
for the coating of substrates.

2. Use in accordance with claim 1 wherein the α-hydroxy acids are represented by the formula 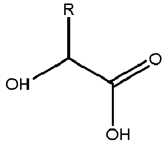 wherein R is a linear, branched, or cyclic aliphatic group having 1 to 30 carbon atoms, an aryl group comprising 6 to 30 carbon atoms which may comprise a fused ring, or an alkylaryl group having 7 to 40 carbon atoms.

3. Use in accordance withany of the preceding claims wherein the α-hydroxy acid is selected from glycolic acid, lactic acid, malic acid, citric acid, tartaric acid or from products obtained through diazotation of α-amino acids.

4. Use in accordance with claim 3 wherein the α-hydroxy acid is selected from lactic acid or glycolic acid or mixtures thereof.

5. Use in accordance with any of the preceding claims wherein the alkyl dialkylsiloxane is represented by the formula 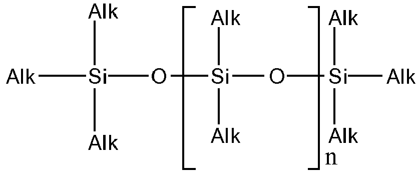 wherein Alk, which may be the same or different at each occurence, represents a linear, branched or cyclic alkyl group.

6. Use in accordance with claim 5 wherein Alk is a methyl group.

7. Use in accordance with any of the preceding claims wherein the substrate is selected from floorings, materials used for building elements in construction or furnitures.

8. Use in accordance with any of claims 1 to 6 wherein the substrate is a film, foil or shaped article based on paper or paper like materials or based on synthetic or natural resins.

9. Use in accordance with any of claims 1 to 6 wherein the substrate is selected from the group consisting of plates, food containers, degradable utensils, tableware and shaped or formed articles made from wood, plastics, textiles, artificial leather or natural leather.

10. Use in accordance with any of claims 1 to 6 wherein the substrate is selected from substrates with metallic surfaces.

11. Use in accordance with any of claims 1 to 6 wherein the substrate is an implant.

12. Use in accordance with any of claims 1 to 6 wherein the substrate is a stent.

13. Use in accordance with any of claims 1 to 6 wherein the substrate is a bulk solid.

14. Use in accordance with any of claims 1 to 6 wherein the substrate is a polymer granulate.
